# EUROPEAN PATENT APPLICATION

(11) **EP 1 518 635 A1**
(43) Date of publication of application: **30.03.2005**
(21) Application number: 03738613.3
(22) Date of filing: 01.07.2003
(51) Int. Cl.: B23K 35/26

(54) **Sn-Ag BASED LEAD-FREE SOLDER**

(30) Priority: 01.07.2002 JP 2002191751; 16.04.2003 JP 2003111069
(71) Applicant: Mitsui Mining & Smelting Co., Ltd., Tokyo 141-8584 (JP)
(72) Inventor: NAKAHARA, Yunosuke, M. MINING & SMELTING CO., LTD., Ageo-shi, Saitama 362-0021 (JP); NINOMIYA, Ryuji, M. MINING & SMELTING CO., LTD., Ageo-shi, Saitama362-0021 (JP)
(74) Representative: Strehl Schübel-Hopf & Partner
(86) International application number: PCT/JP2003/008366
(87) International publication number: WO 2004/002674

(57) **Abstract**

To provide a tin-silver based lead-free solder which can improve joint strength in the initial stage, and can curtail a decrease in joint strength after heat treatment, at a joined interface with an electroless plating, zinc (Zn) is added to a solder comprising a tin-silver system containing no lead.

## Description

### Technical Field

This invention relates to a solder comprising a tin-silver system containing no lead.

### Background Art

In recent years, electronic devices have increasing become narrow-pitched in response to the downsizing and high functionality of various electric equipment. In electronic mounting and packaging technologies, electroless Ni-P plating, which is capable of selective precipitation and can form a uniform film, is applied.

From the aspect of global environmental issues in recent years, on the other hand, solders containing no lead (lead-freed) as a constituent element have promptly advanced. In light of various characteristics, Sn-Ag based solders are considered to be the closest to practical use (see, for example, Japanese Patent Application Laid-Open No. 1998-328880, Japanese Patent Application Laid-Open No. 2001-71174, and Japanese Patent Application Laid-Open No. 2001-150181).

In recent years, a two-element solder, Sn-3.5Ag solder, has begun to be used for BGA (Ball Grid Array). This Sn-3.5Ag solder has the problems that at its interface with an electroless Ni-P plating, joint strength in an initial stage is low, and joint strength after heat treatment decreases.

Moreover, the Sn-3.5Ag solder has a high melting point. Thus, packaging evaluation in recent years has shown this solder to cause damage to components under the influence of heat. In view of this finding, the addition of In, an element effectively lowering the melting point, has been studied. Since In, when added, scarcely changes the mechanical properties of the solder itself, it has attracted attention in recent years.

The Sn-3.5Ag solder, however, poses the following problems: I f the amount of In added increases, the joint strength in the initial stage decreases at its joined interface with the electroless Ni-P plating. If the amount of In added is 5% or more, in particular, a decrease in the joint strength after heat treatment is very great.

It is an object of the present invention, therefore, to provide a tin-silver based lead-free solder which can improve joint strength in the initial stage at a joined interface between Sn-3.5Ag or Sn-3.5Ag-xIn and an electroless plating, and can curtail a decrease in the joint strength after heat treatment.

### Disclosure of the Invention

We, the inventors, diligently conducted studies to solve the above-described problems. As a result, we have found that the addition of a small amount of zinc to a tin-silver based solder composition is effective for the strength of joint, and a change in an interface layer, with an electroless Ni-P plating. This finding has led us to accomplish the present invention.

A first invention based on this finding lies in a tin-silver based lead-free solder, characterized by containing zinc (Zn) added to a solder comprising a tin-silver system containing no lead.

A second invention lies in the tin-silver based lead-free solder of the first invention, characterized by further containing indium (In) added thereto.

A third invention lies in the tin-silver based lead-free solder of the first invention, characterized in that the amount of zinc (Zn) added is 0.3 to 1.0 wt.%, the remainder being tin and silver.

A fourth invention lies in the tin-silver based lead-free solder of the second invention, characterized in that the amount of indium (In) added is less than 10 wt.%, and the amount of zinc (Zn) added is 0.1 to 1.0 wt.%, the remainder being tin and silver.

A fifth invention lies in a joint structure, characterized in that bodies to be joined are joined together by the tin-silver based lead-free solder of any one of the first to fourth inventions.

A sixth invention lies in the joint structure of the fifth invention, characterized in that an electroless plating layer is provided on the surface of the bodies to be joined.

A seventh invention lies in the joint structure of the sixth invention, characterized in that the electroless plating layer is a Ni-P plating.

### Brief Description of the Drawings

FIG. 1 is a schematic configurational drawing of a test piece used in an Example of the tin-silver based lead-free solder according to the present invention.
FIG. 2 is a graph showing changes with time in the thickness of a Ni-Sn reaction layer upon heat treatment of a test piece using a solder of a composition A1.
FIG. 3 is a graph showing changes with time in the thickness of a Ni-Sn reaction layer upon heat treatment of a test piece using a solder of a composition B1.
FIG. 4 is a graph showing changes with time in the thickness of a Ni-Sn reaction layer upon heat treatment of a test piece using a solder of a composition C5.
FIG. 5 is a graph showing changes with time in the thickness of a P-concentrated layer upon heat treatment of the test piece using the solder of the composition A1.
FIG. 6 is a graph showing changes with time in the thickness of a P-concentrated layer upon heat treatment of the test piece using the solder of the composition B1.
FIG. 7 is a graph showing changes with time in the thickness of a P-concentrated layer upon heat treatment of the test piece using the solder of the composition C5.
FIG. 8 is a graph showing changes with time in the thicknesses of Ni-Sn reaction layers upon heat treatment of test pieces using solders of compositions A1, D2, D4 and D6.
FIG. 9 is a graph showing changes with time in the thicknesses of P-concentrated layers upon heat treatment of the test pieces using the solders of the compositions A1, D2, D4 and D6.
FIG. 10 is a graph showing changes with time in the thicknesses of Ni-Sn reaction layers upon heat treatment of test pieces using solders of compositions D6 and E1 to E5.
FIG. 11 is a graph showing changes with time in the thicknesses of P-concentrated layers upon heat treatment of the test pieces using the solders of the compositions D6 to E1 to E5.
FIG. 12 is a graph showing the relationship between the amount of zinc added and wettability in a Sn-Ag-In-Zn solder.
FIG. 13 is a SEM photograph of interface layers after heat treatment of the test pieces, the solder of the composition D6 being used in FIG. 13(a), and the solder of the composition E5 being used in FIG. 13(b).

### Best Mode for Carrying Out the Invention

Embodiments of the tin-silver based lead-free solder according to the present invention will now be described, but the present invention is not limited to the following embodiments.

The tin-silver based lead-free solder according to the present invention is a solder comprising a tin(Sn)-silver(Ag) system containing no lead, the solder having zinc (Zn) added thereto.

The tin-silver based lead-free solder contains 3 to 3.5 wt.% of silver (Ag), the remainder being tin (Sn). The solder containing 3.5 wt.% of silver (Ag) blended with tin (Sn) is designated as Sn-3.5Ag.

The amount of zinc (Zn) added is preferably 0.3 to 1.0 wt.%, and more preferably 0.7 to 1.0 wt.%. This is because if the amount of zinc (Zn) added is less than 0.3 wt.%, the effect of improving the joint strength in an initial stage is low. If the amount of zinc (Zn) added exceeds 1.0 wt.%, the effect of improving the initial joint strength is low, and the effect of curbing the decrease in the joint strength after heat treatment is also low.

In the tin-silver based lead-free solder according to the present invention, it is also preferred for indium (In) to be further added.

At this time, it is preferred that the amount of indium (In) added is less than 10 wt.%, and the amount of zinc (Zn) added is 0.1 to 1.0 wt.%. This is because the amount of indium (In) added being 10 wt.% or more is not preferred from the aspects of cost and solderability. The amount of zinc (Zn) added being less than 0.1 wt.% would result in a greater decrease in the joint strength. The amount of zinc (Zn) added exceeding 1.0 wt.% would lead to decline in wettability.

When bodies to be joined are joined together by use of the above-described tin-silver based lead-free solder according to the present invention, the joining strength of the junction structure is improved.

Particularly when an electroless plating layer is provided on the bodies to be joined, the decrease in the joint strength can be markedly curtailed in comparison with the conventional solder.

The type of the electroless plating layer is not limited, but a Ni-P plating is extremely effective.

### Example

To confirm the effect of the tin-silver based lead-free solder according to the present invention, the following tests were conducted:

### [Preparation of solder]

The components were blended in the proportions shown in the Table 1 indicated below. The blend was melted at 300°C, then poured into a mold, and cooled to room temperature for casting, thereby preparing a tin-silver based lead-free solder.

**<Table 1>**

| Composition | | Ag | Cu | In | Zn | Sn |
|---|---|---|---|---|---|---|
| A | 1 | 3.5 | - | - | - | Remainder |
| B | 1 | 3.5 | 0.5 | - | - | Remainder |
| C | 1 | 3.5 | - | - | 0.1 | Remainder |
| | 2 | 3.5 | - | - | 0.3 | Remainder |
| | 3 | 3.5 | - | - | 0.5 | Remainder |
| | 4 | 3.5 | - | - | 0.7 | Remainder |
| | 5 | 3.5 | - | - | 1.0 | Remainder |
| | 6 | 3.5 | - | - | 1.3 | Remainder |
| | 7 | 3.5 | - | - | 1.5 | Remainder |
| D | 1 | 3.5 | - | 3 | - | Remainder |
| | 2 | 3.5 | - | 4 | - | Remainder |
| | 3 | 3.5 | - | 5 | - | Remainder |
| | 4 | 3.5 | - | 6 | - | Remainder |
| | 5 | 3.5 | - | 7 | - | Remainder |
| | 6 | 3.5 | - | 8 | - | Remainder |
| | 7 | 3.5 | - | 10 | - | Remainder |
| E | 1 | 3.5 | - | 8 | 0.1 | Remainder |
| | 2 | 3.5 | - | 8 | 0.3 | Remainder |
| | 3 | 3.5 | - | 8 | 0.5 | Remainder |
| | 4 | 3.5 | - | 8 | 0.7 | Remainder |
| | 5 | 3.5 | - | 8 | 1.0 | Remainder |

### [Preparation of body to be joined]

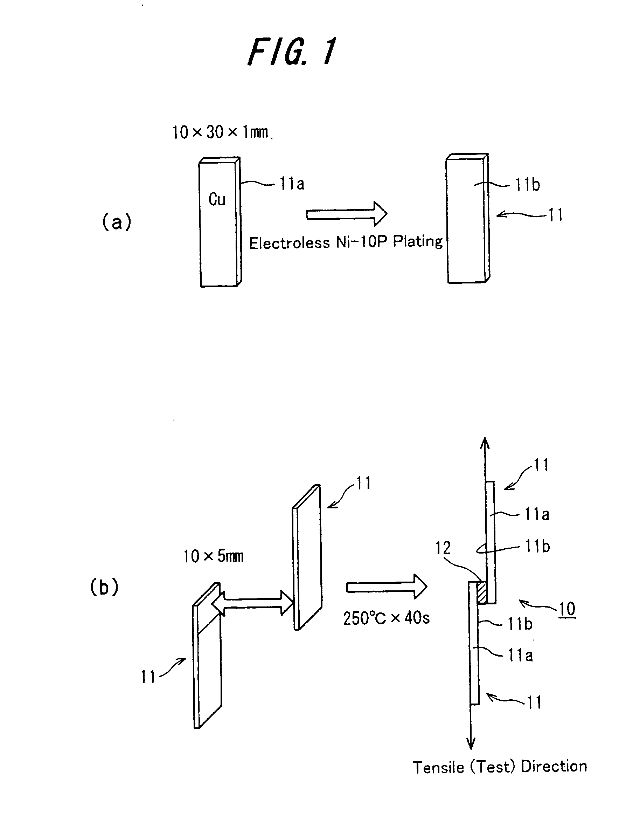

As shown in FIG. 1(a), an electroless Ni-10P plating layer 11b (thickness: about 5 µm) was applied to a copper plate 11a (10×30×1 mm) to prepare a body 11 to be joined.

### [Preparation of test piece]

As shown in FIG. 1(b), two of the aforementioned solders 12 (2×2×0.1 mm) in the form of a thin piece were interposed between two of the above-mentioned bodies 11 to be joined. The resulting composite was heated (250°C×40s) by a hot plate to join the bodies 11 together, whereby a test piece 10 was prepared for the aforementioned solder 12 of each of the aforesaid compositions A1, B1, C1 to C7, D1 to D7, and E1 to E5.

### [Testing methods]

The joint strengths of each of the test pieces 10 before heat treatment and after heat treatment were measured by an Instron type tester (measurement conditions: temperature = room temperature, crosshead speed = 10 mm/min, n = 5).

The joined interface was observed by a scanning electron microscope (SEM) and an energy dispersive X-ray analyzer (EDX) to investigate changes with time in the thickness of the interface layer due to heat treatment (arbitrary 10 points were sampled from a photograph taken under SEM, measurements were made of these points, and the average of the measured values was calculated).

### [Test results]

### (1) Compositions A to C

### i) Joint strength

The results of the measurements of the joint strength of the test piece 10 using the solder 12 of each of the compositions A to C are shown in Tables 2 and 3 below. The heat treatment was performed for 1,000 hours at temperatures of 100°C, 125°C and 150°C.

**<Table 2>**

| Composition | Heat treatment temperature (°C) | Before heat treatment (MPa) | After heat treatment (MPa) | Decrease rate (%) |
|---|---|---|---|---|
| A1 | 100 | 35.73 | 33.73 | 5.6 |
| | 125 | 35.73 | 32.96 | 7.8 |
| | 150 | 35.73 | 30.80 | 13.8 |
| B1 | 100 | 37.56 | 34.28 | 8.7 |
| | 125 | 37.56 | 31.37 | 16.5 |
| | 150 | 37.56 | 29.80 | 20.7 |

**<Table 3>**

| Composition | Heat treatment temperature (°C) | Before heat treatment (MPa) | After heat treatment (MPa) | Decrease rate (%) |
|---|---|---|---|---|
| C1 | 100 | 35.38 | 33.61 | 5.0 |
| | 125 | 35.38 | 32.80 | 7.3 |
| | 150 | 35.38 | 30.56 | 13.6 |
| C2 | 100 | 35.86 | 34.10 | 4.9 |
| | 125 | 35.86 | 33.42 | 6.8 |
| | 150 | 35.86 | 31.12 | 13.2 |
| C3 | 100 | 36.15 | 34.80 | 3.7 |
| | 125 | 36.15 | 33.91 | 6.2 |
| | 150 | 36.15 | 31.56 | 12.7 |
| C4 | 100 | 36.52 | 35.80 | 2.0 |
| | 125 | 36.52 | 34.31 | 6.1 |
| | 150 | 36.52 | 32.20 | 11.8 |
| C5 | 100 | 37.07 | 36.81 | 0.7 |
| | 125 | 37.07 | 36.20 | 2.3 |
| | 150 | 37.07 | 35.10 | 5.3 |
| C6 | 100 | 35.59 | 34.90 | 1.9 |
| | 125 | 35.59 | 33.48 | 5.9 |
| | 150 | 35.59 | 31.60 | 11.2 |
| C7 | 100 | 34.28 | 33.42 | 2.5 |
| | 125 | 34.28 | 31.90 | 6.9 |
| | 150 | 34.28 | 29.93 | 12.7 |

As shown in Tables 2 and 3, the test pieces 10 using the solders 12 of the composition B1 (copper added) and the compositions C2 to C5 (0.3 to 1.0 wt.% of zinc added) improved in the joint strength in the initial stage over the test piece 10 using the solder 12 of the composition A1 (no copper or zinc added).

The test pieces 10 using the solders 12 of the compositions C2 to C5 (0.3 to 1.0 wt.% of zinc added) showed the effect of curtailing the decrease in the joint strength after heat treatment, as compared with the test piece 10 using the solder 12 of the composition A1 (no copper or zinc added). The test piece 10 using the solder 12 of the composition C5 (1.0 wt.% of zinc added), in particular, was able to markedly curtail the decrease in the joint strength after heat treatment. The test piece 10 using the solder 12 of the composition B1 (copper added), however, was unable to curtail the decrease in the joint strength after heat treatment.

From the above findings, it has become clear that the solders 12 of the compositions C2 to C5 (0.3 to 1.0 wt.% of zinc added) can improve the joint strength in the initial stage, and curtail the decrease in the joint strength after heat treatment, at the joined interface with the electroless Ni-10P plating, and the solder 12 of the composition C5 (1.0 wt.% of zinc added), in particular, shows this effect markedly.

### ii) Changes in thickness of interface layer

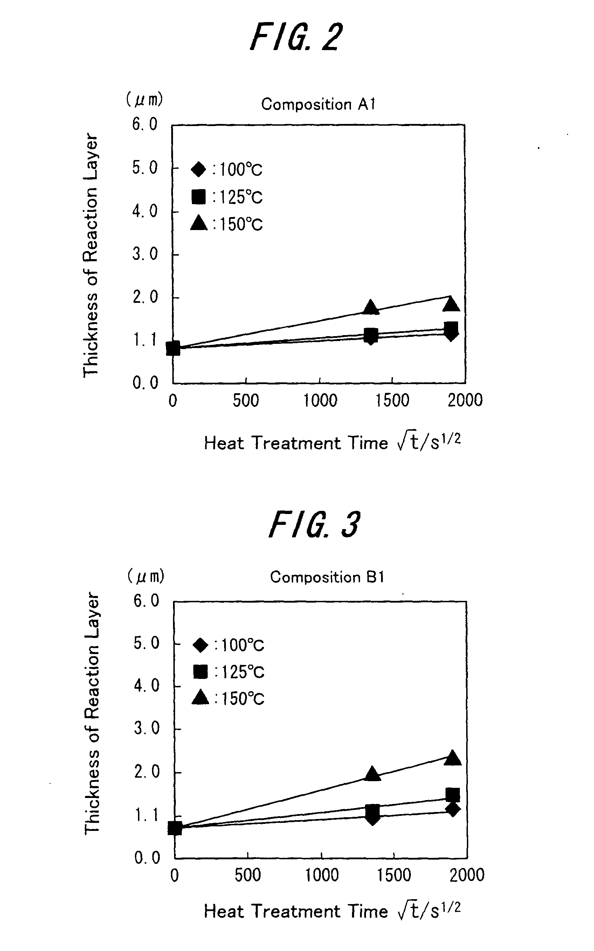

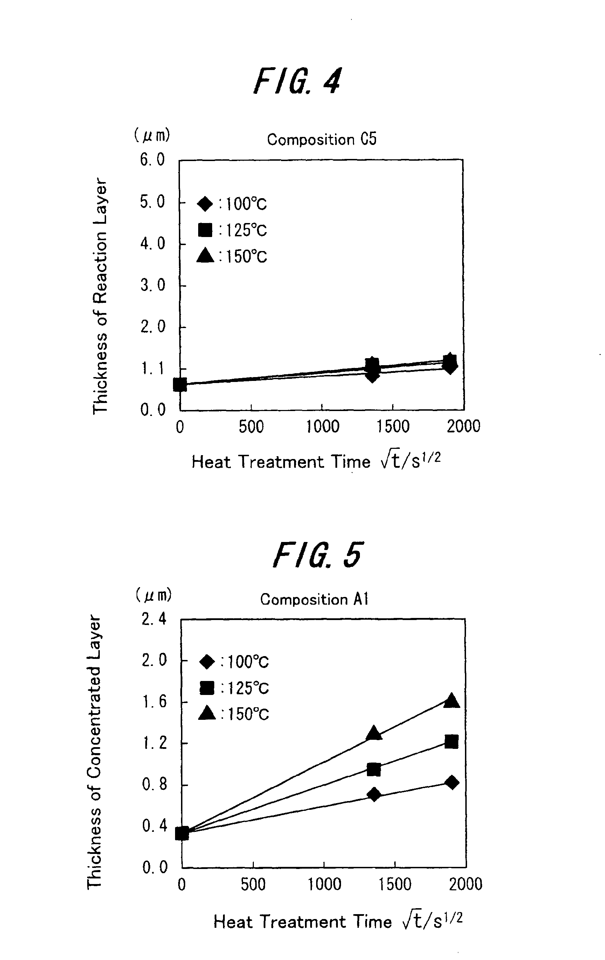

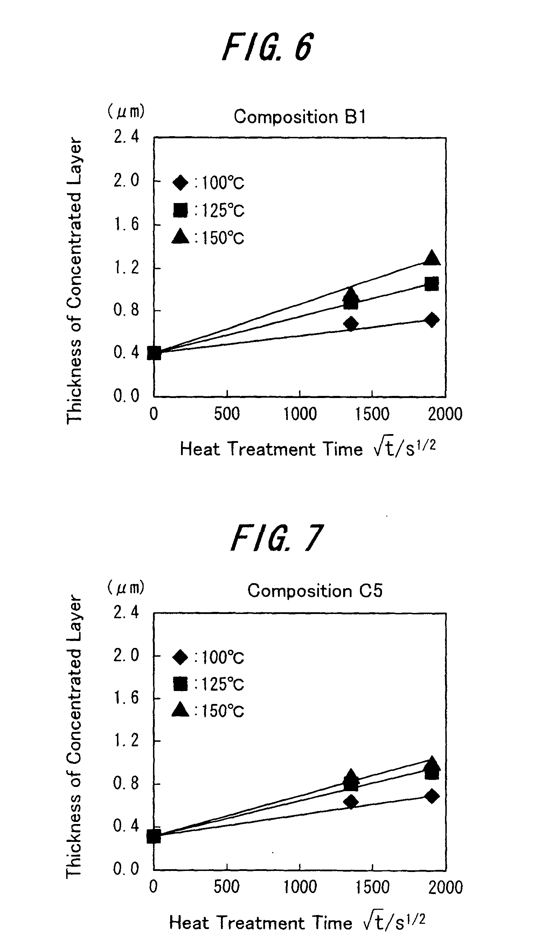

Generally, it is assumed that two types of layers, i.e., a Ni-Sn reaction layer and a P-concentrated layer, are formed as an interface layer between a Sn-Ag based solder and an electroless Ni-P plating, and these layers gradually grow upon heat treatment, whereby the joint strength gradually lowers. Thus, the test pieces 10 using the solders 12 of the composition A1 (no addition) , the composition B1 (copper added), and the composition C5 (1.0 wt.% of zinc added) were examined for changes with time in the thickness of the above interface layer upon heat treatment (temperatures of 100°C, 125°C and 150°C). The results are shown in FIGS. 2 to 7. In FIGS. 2 to 7, the horizontal axis represents the square root of the heat treatment time, and the vertical axis represents the thickness of the above-mentioned layer.

As shown in FIGS. 2 to 7, the interface layer increases in thickness linearly, and is thus presumed to grow with rate-determining diffusion.

The changes with time in the thickness of the above interface layer upon heat treatment in the test piece 10 using the solder 12 of the composition C5 (1.0 wt.% of zinc added) are clearly smaller than the changes with time in the thicknesses of the above interface layers upon heat treatment in the test pieces 10 using the solders 12 of the composition B1 (copper added) and the composition C5 (1.0 wt.% of zinc added).

Based on these findings, it is speculated that the addition of zinc suppresses the growth of the interface layer, thereby curtailing the decrease in the joint strength after heat treatment.

### (2) Composition D

### i) Joint strength

The results of the measurements of the joint strengths of the test pieces 10 using the solders 12 of the compositions D1 to D7 (indium added) are shown in Table 4 below. As a control, the results of the measurement of the joint strength of the test piece 10 using the solder 12 of the composition A1 (no addition) are also tabulated. The heat treatment was performed for 1,000 hours at a temperature of 100°C.

**<Table 4>**

| Composition | Before heat treatment (MPa) | After heat treatment (MPa) | Decrease rate (%) |
|---|---|---|---|
| A1 | 35.73 | 32.92 | 7.9 |
| D1 | 36.87 | 35.20 | 4.5 |
| D2 | 36.50 | 33.79 | 7.4 |
| D3 | 36.25 | 28.55 | 21.2 |
| D4 | 34.57 | 19.96 | 42.3 |
| D5 | 34.09 | 18.41 | 46.0 |
| D6 | 29.20 | 13.03 | 55.4 |
| D7 | 24.48 | 15.40 | 37.1 |

As shown in Table 4, the test pieces 10 using the solders 12 of the compositions D4 to D7 (6 wt.% or more of indium added) decreased in the joint strength in the initial stage, as compared with the test piece 10 using the solder 12 of the composition A1 (no addition). The test pieces 10 using the solders 12 of the compositions D3 to D7 (5 wt. % or more of indium added) decreased in the joint strength after heat treatment, as compared with the test piece 10 using the solder 12 of the composition A1 (no addition). The test piece 10 using the solder 12 of the composition D6 (8 wt.% of indium added), in particular, decreased in the joint strength after heat treatment by as much as 55%.

### ii) Changes in thickness of interface layer

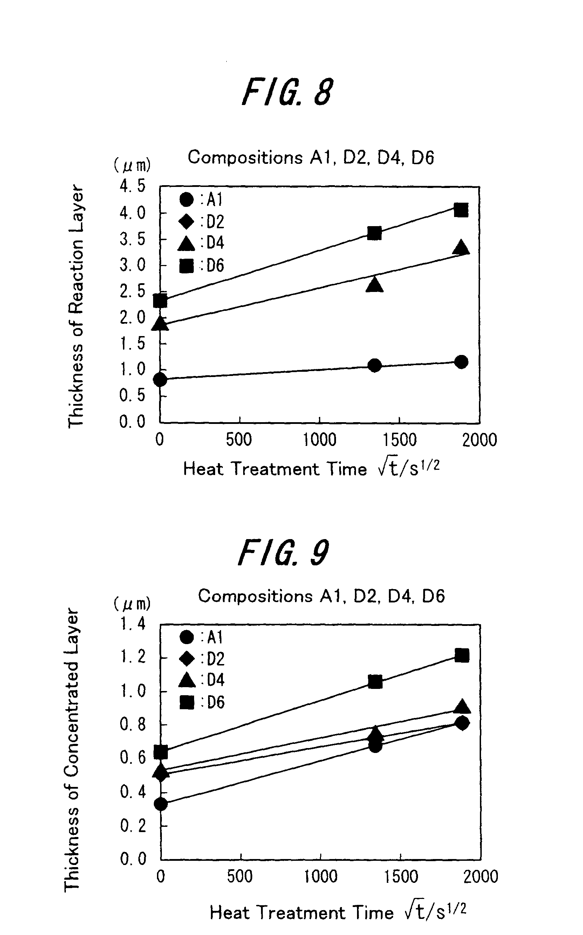

The test pieces 10 using the solders 12 of the compositions D2, D4 and D6 (4 wt.%, 6 wt.% and 8 wt.% of indium added) were examined for changes with time in the thickness of the above interface layer upon heat treatment (100°C). The results are shown in FIGS. 8 and 9. As a control, changes with time in the thickness of the above interface layer upon heat treatment (100°C) in the test piece 10 using the solder 12 of the composition A1 (no addition) are also shown.

As shown in FIGS. 8 and 9, the changes with time in the thickness of the above interface layer upon heat treatment in the test piece 10 using the solder 12 of the composition D2 (4 wt.% of indium added) were comparable to the changes with time in the thickness of the above interface layer upon heat treatment in the test piece 10 using the solder 12 of the composition A1 (no addition). However, the changes with time in the thicknesses of the above interface layers upon heat treatment in the test pieces 10 using the solders 12 of the composition D4 and D6 (6 wt. % and 8 wt. % of indium added) were greater than the changes with time in the thickness of the above interface layer upon heat treatment in the test piece 10 using the solder 12 of the composition A1 (no addition).

Based on these findings, it is speculated that when the amount of indium added exceeds a predetermined value, the growth of the interface layer is promoted, whereby the joint strength after heat treatment is decreased.

### (3) Composition E

### i) Joint strength

Table 5 offered below shows the results of the measurements of the joint strengths of the test pieces 10 using the solders 12 of the compositions E1 to E5 containing zinc added to the composition D6 (8 wt.% of indium added) that caused the largest decrease in the joint strength. As a control, the results of the measurement of the joint strength of the test piece 10 using the solder 12 of the composition D6 (8 wt.% of indium added) are also tabulated. The heat treatment was performed for 1, 000 hours at a temperature of 100°C.

**<Table 5>**

| Composition | Before heat treatment (MPa) | After heat treatment (MPa) | Decrease rate (%) |
|---|---|---|---|
| D6 | 29.20 | 13.03 | 55.4 |
| E1 | 33.68 | 28.00 | 16.9 |
| E2 | 33.61 | 30.05 | 10.6 |
| E3 | 34.17 | 34.30 | 0.0 |
| E4 | 34.24 | 34.10 | 0.4 |
| E5 | 35.75 | 34.99 | 2.1 |

As shown in Table 5, all the test pieces 10 using the solders 12 of the compositions E1 to E5, which had zinc added thereto, were able to curtail the decreases in the joint strengths in the initial stage and after heat treatment, in comparison with the test piece 10 using the solder 12 of the composition D6 having no zinc added thereto. The test pieces 10 using the solders 12 of the compositions E3 to E5 (0.5 to 1.0 wt.% of zinc added), in particular, were found to have a very high effect of curtailing a decrease in the joint strength.

### ii) Changes in thickness of interface layer

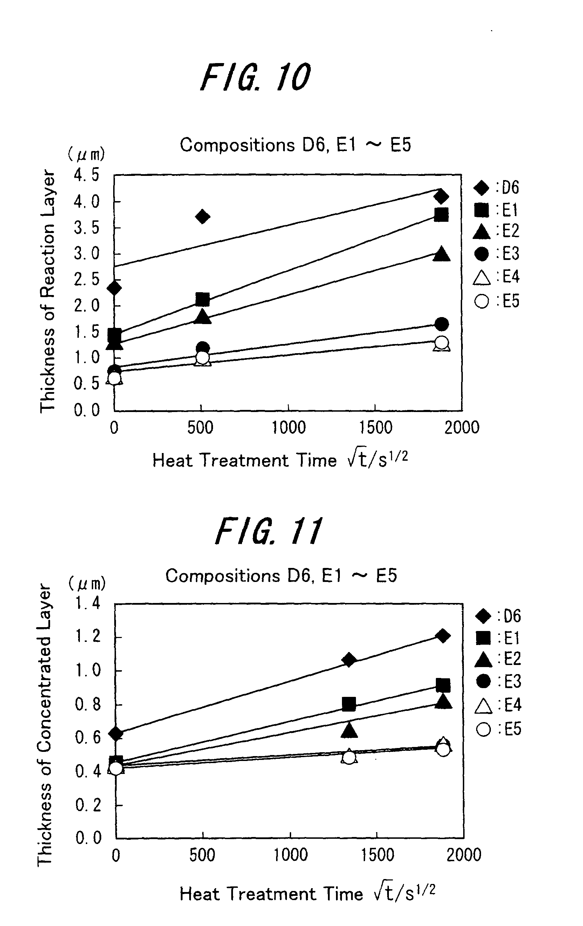

The test pieces 10 using the solders 12 of the compositions E1 to E5 (zinc added) were examined for changes with time in the thickness of the above interface layer upon heat treatment (100°C). The results are shown in FIGS. 10 and 11. As a control, changes with time in the thickness of the above interface layer upon heat treatment (100°C) in the test piece 10 using the solder 12 of the composition D6 (no addition of zinc) are also shown.

As shown in FIGS. 10 and 11, the interface layer increases in thickness linearly, and is thus presumed to grow with rate-determining diffusion.

The changes with time in the thicknesses of the above interface layers upon heat treatment in the test pieces 10 using the solders 12 of the compositions E1 to E5, which had zinc added thereto, were clearly smaller than the changes with time in the thickness of the above interface layer upon heat treatment in the test piece 10 using the solder 12 of the composition D6 without the addition of zinc. The changes with time in the thicknesses of the above interface layers upon heat treatment in the test pieces 10 using the solders 12 of the compositions E3 to E5 (0.5 to 1.0 wt.% of zinc added), in particular, were much smaller than the changes with time in the thickness of the above interface layer upon heat treatment in the test piece 10 using the solder 12 of the composition D6 (without the addition of zinc). These results were the same as those obtained for the amounts of zinc addition found to produce the effect of curtailing the decrease in the joint strength.

Based on these findings, it is speculated that the addition of zinc suppresses the growth of the interface layer, thereby curtailing the decrease in the joint strength after heat treatment. Accordingly, it can be said that the suppression of the growth of the interface layer is of crucial importance to the curtailment of the decrease in the joint strength.

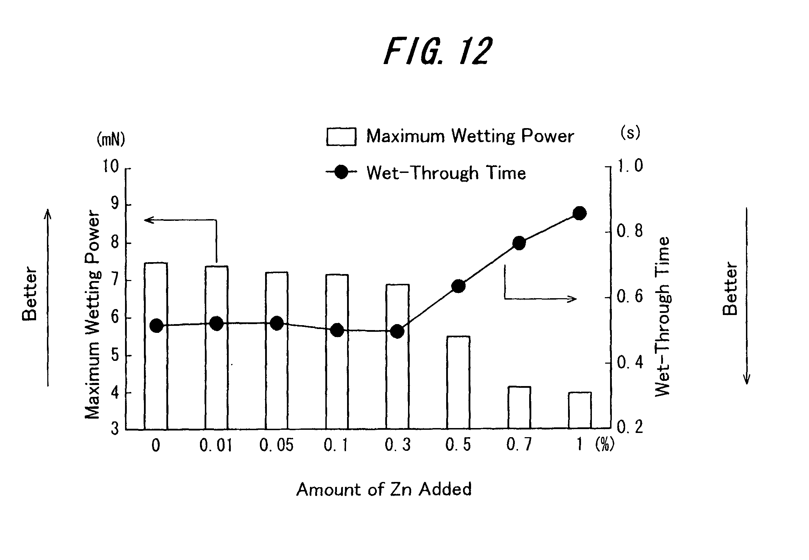

The relationship between the amount of zinc added and wettability is shown in FIG. 12. As shown in FIG. 12, the additionof zinc is found to decrease wettability. In consideration of wettability, therefore, it is preferred to set the amount of zinc addition at 0.7 wt.% or less.

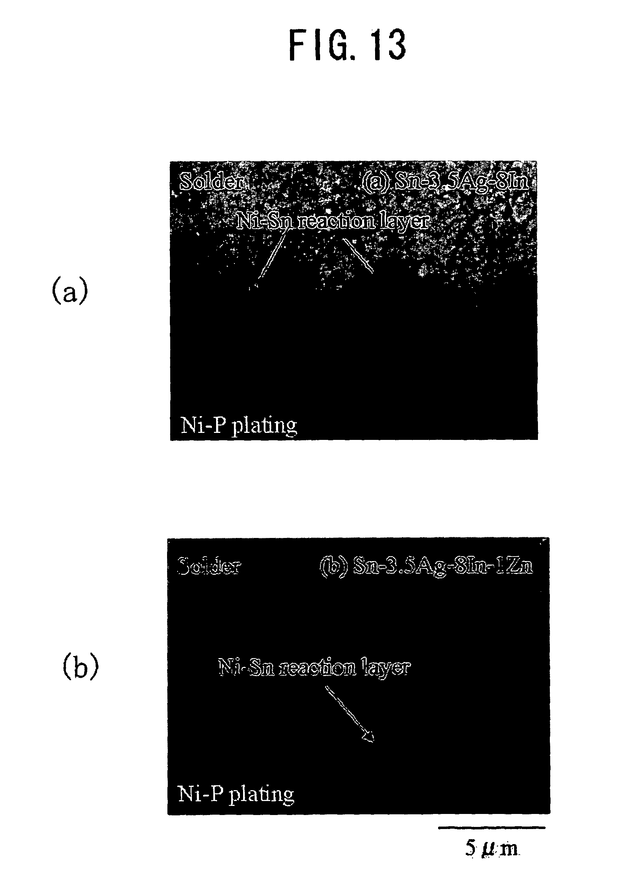

An SEM photograph of the aforementioned interface layer after heat treatment (100°C×1,000 hours) of the test piece 10 using the solder 12 of the composition D6 is shown in FIG. 13(a). An SEM photograph of the aforementioned interface layer after heat treatment (100°C×1,000 hours) of the test piece 10 using the solder 12 of the composition E5 (1.0 wt.% of zinc added) is shown in FIG. 13 (b). As shown in FIG. 13, it is clear that the addition of zinc can suppress the growth of the interface layer, thus curtailing the decrease in the joint strength.

### [Summary]

The results of the investigation of the strength of joint, and changes in the interface layer, between the Sn-Ag based solder and the electroless Ni-P plating in the foregoing Example can be summarized as follows:
(1) By adding 0.3 to 1.0 wt.% of zinc to Sn-3.5Ag, it was possible to improve the joint strength in the initial stage, and curtail the decrease in the joint strength upon heat treatment. The addition of 0.7 to 1.0 wt.% of zinc, in particular, increased this effect remarkably. Growth of the interface layer was also suppressed by the addition of zinc.
(2) The joint strength of Sn-3.5Ag-xIn, in the initial stage, decreased when the amount of indium added was 8 wt.% or more. The joint strength of Sn-3.5Ag-xIn, after heat treatment, decreased when the amount of indium added was 5 wt.% or more, and decreased maximally when the amount of indium added was 8 wt. %. In the test pieces that caused decreases in the joint strength, the growth of the interface layer tended to be great.
(3) When zinc was added to Sn-3.5Ag-8In, the joint strength in the initial stage was increased. When heat treatment was performed without addition of zinc, the joint strength after heat treatment decreased by about 55%. Upon addition of zinc, the decrease in the joint strength after heat treatment was curtailed. At this time, the addition of 0.1 wt.% of zinc can curtail the decrease in the joint strength, but the addition of 0.5 wt.% or more of zinc can obtain a greater effect.
(4) Sn-3.5Ag-8In, when heat treated, leads to a marked growth of the aforementioned interface layer, but if 0.5 wt.% or more of zinc is added, can suppress the growth of the interface layer.

### Industrial Applicability

The tin-silver based lead-free solder of the present invention contains zinc (Zn) added thereto, and thus can suppress the growth of the interface layer, improve the joint strength in the initial stage, and curtail the decrease in the joint strength after heat treatment.

Particularly, if bodies to be joined, which have been plated, are joined together by the solder of the present invention, the joint strength in the initial stage can be improved, and the decrease in the joint strength after heat treatment can be curtailed.

## Claims

1. A tin-silver based lead-free solder,
**characterized by**:
containing zinc (Zn) added to a solder comprising a tin-silver system containing no lead.

2. The tin-silver based lead-free solder according to claim 1, **characterized by**
further containing indium (In) added thereto.

3. The tin-silver based lead-free solder according to claim 1, **characterized in that**
an amount of zinc (Zn) added is 0.3 to 1.0 wt.%, a remainder being tin and silver.

4. The tin-silver based lead-free solder according to claim 2, **characterized in that**
an amount of indium (In) added is less than 10 wt.%, and an amount of zinc (Zn) added is 0.1 to 1.0 wt.%, a remainder being tin and silver.

5. A joint structure, **characterized in that**
bodies to be joined are joined together by the tin-silver based lead-free solder of any one of claims 1 to 4.

6. The joint structure according to claim 5,
**characterized in that**
an electroless plating layer is provided on surfaces of said bodies to be joined.

7. The joint structure according to claim 6,
**characterized in that**
said electroless plating layer is a Ni-P plating.
